# EUROPÄISCHE PATENTSCHRIFT

(11) **EP 1 700 759 B1**
(45) Veröffentlichungstag und Bekanntmachung des Hinweises auf die Patenterteilung: **05.03.2008**
(21) Anmeldenummer: 06002699.4
(22) Anmeldetag: 10.02.2006
(51) Int. Cl.: B60R 25/00

(54) **Sicherungseinrichtung und Sicherungsverfahren für Fahrzeuganhänger**
Trailer locking device and method
Dispositif et procédé de verrouillage pour remorque

(30) Priorität: 18.02.2005 DE 202005002720 U
(43) Veröffentlichungstag der Anmeldung: 13.09.2006
(73) Patentinhaber: AL-KO KOBER AG, D-89359 Kötz (DE)
(72) Erfinder: Bestler, Wolfgang, 89343 Schönenberg (DE); Beck, Gerhard, 89343 Jettingen-Scheppach (DE); Fink, Bernd, 89359 Kötz (DE); Mairle, Josef, 89359 Kötz (DE); Köhler, Robert, 86480 Waltenhausen (DE)
(74) Vertreter: Ernicke, Klaus Stefan

(56) Entgegenhaltungen:
- EP-A- 1 593 563
- GB-A- 2 254 304
- GB-A- 2 266 871

## Beschreibung

Die Erfindung betrifft eine Sicherungseinrichtung und ein Sicherungsverfahren für Fahrzeuganhänger mit den Merkmalen im Oberbegriff des Verfahrens- und Vorrichtungshauptanspruchs.

Aus der Praxis ist es bekannt, Fahrzeuganhänger gegen Diebstahl, Wegfahren und unbefugte Benutzung durch Diebstahlssicherungen auf der Anhängerkupplung zu sichern. Dies ist keine für alle Fälle ausreichende Sicherung. Sie verhindert nur ein Ankuppeln des Anhängers an ein Zugfahrzeug, verhindert aber nicht ein Wegschieben oder anderweitiges Bewegen des Anhängers.

Das Dokument GB-A-2266871 offenbart ebenfalls eine Sicherungseinrichtung gemäß dem Oberbegriff des Anspruchs 1, ein Sperrteil das lösbar mit einer Felge eines Fahrzeuganhängers verbindbar ist, sowie ein Verfahren gemäß dem Oberbegriff des Anspruchs 29.

Es ist Aufgabe der vorliegenden Erfindung, eine bessere Sicherungstechnik aufzuzeigen.

Die Erfindung löst diese Aufgabe mit den Merkmalen im Verfahrens- und Vorrichtungshauptanspruch.

Die beanspruchte Sicherungstechnik hat den Vorteil, dass sie einerseits als Wegfahrsicherung das Fahrzeugrad gegen Drehung und somit den Fahrzeuganhänger gegen Wegschieben oder Wegrollen sperrt. Andererseits verhindert sie, dass das Fahrzeugrad oder zumindest die Felge unbefugt abgenommen werden können. Die Sicherungseinrichtung und das Sicherungsverfahren bieten dadurch einen optimalen Diebstahlsschutz für den Fahrzeuganhänger.

Die Sicherungseinrichtung kann von der Radfrontseite her bequem und einfach bedient werden. Der Bediener muss nicht hinter das Fahrzeugrad oder unter den Fahrzeuganhänger langen. Die frontale Bedienung der Sicherungseinrichtung bringt auch Vorteile hinsichtlich Verschmutzungsgefahr, Kontrollmöglichkeit, Ergonomie und Bedienungssicherheit für den Benutzer mit sich.

Die beanspruchte Sicherungseinrichtung hat eine hohe mechanische Stabilität. Sie bietet einen hohen Widerstand auch gegen massive Aufbrechversuche, z.B. durch gewaltsames Anfahren mit einem angekuppelten Zugfahrzeug. Außerdem ist die Sicherheit gegen mechanische Zerstörung durch Sägen, Trennscheiben oder dgl. hoch. Durch ihre Anordnung und insbesondere auch ihren Angriff am Bremsträger ist die Sicherungseinrichtung in einem von außen schlecht zugänglichen Fahrzeugbereich angeordnet, was ebenfalls die Sicherheit gegen Gewaltanwendung erhöht. Günstig ist außerdem, dass die Sicherungseinrichtung das Fahrzeugrad ohne großes Spiel festhält, so dass bei Diebstahlsversuchen und insbesondere bei einem gewaltsamen Anfahren extreme Belastungen durch Schläge oder Stöße vermieden werden können.

Die Sicherungseinrichtung lässt sich sowohl in Neufahrzeuge integrieren, als auch an Gebrauchtfahrzeugen nachrüsten oder umrüsten. Der Bau- und Montageaufwand ist gering. Insbesondere sind keine größeren Eingriffe an den Fahrzeugteilen selbst erforderlich. Insbesondere bedarf es keiner Eingriffe am Radschwinghebel oder am Fahrgestell. Die Sicherungseinrichtung greift stattdessen am Bremsträger an, was ein hierfür weniger kritisches Bauteil ist. Die Nachrüstung der Sicherungseinrichtung bringt außerdem keine zulassungsrechtlichen Probleme mit sich. Die Montage und insbesondere die Nachrüstung kann auch beim Händler oder sogar beim Endkunden stattfinden.

Der Angriff der Sicherungseinrichtung am Bremsträger und insbesondere am Bremsschild einer Trommelbremse hat verschiedene spezifische Vorteile. Einerseits ermöglicht dies eine sichere und stabile Montage des zugehörigen Basisteils der Sicherungseinrichtung. Die Montagestelle ist außerdem besonders gut verborgen und schwer zugänglich, insbesondere wenn sie an der Rückseite eines Bremsschilds liegt.

Am Bremsschild selbst sind nur geringfügige Eingriffe oder Anpassungen erforderlich. Im Zuge der Nachrüstung braucht der Bremsträger oder Bremsschild nur ausgetauscht zu werden. Durch die geringfügigen Vorbereitungsmaßnahmen ist es außerdem möglich, den Bremsträger oder Bremsschild bereits werksseitig entsprechend auszurüsten und für eine etwaige Nachrüstung der Sicherungseinrichtung vorzubereiten. Der werksseitige Bau- und Vorbereitungsaufwand für die Sicherungseinrichtung kann sehr klein gehalten werden. Weitere fertigungstechnische Vorteile liegen in der hohen Zahl der Gleichteile für Fahrzeuganhänger mit und ohne Sicherungseinrichtung. Dies ist insbesondere für eine Baukastenfertigung günstig.

Für den Montageaufwand ist es günstig, dass für das Anbringen der Sicherungseinrichtung keine Demontage der Achse und des Radschwinghebels erforderlich ist. Mit Blick auf die Stabilität und Widerstandskraft der Sicherungseinrichtung hat der Angriff am Bremsträger oder Bremsschild den Vorteil, dass diese Angriffsstelle relativ nahe an der Felge liegt und die Baulänge der Sicherungseinrichtung entsprechend verkürzt werden kann. Am Bremsträger oder am Bremsschild steht außerdem so viel Platz zur Verfügung, dass das Basisteil der Sicherungseinrichtung massiv und kräftig ausgebildet werden kann.

Zudem ist es möglich, das Basisteil der Sicherungseinrichtung als Schutzkasten auszubilden. Dies erhöht einerseits die mechanische Stabilität und Widerstandskraft des Basisteils gegen Aufbrechversuche und andere mechanische Gewaltanwendung. Außerdem können durch die Kastenkonstruktion noch weitere sicherheitsrelevante Bauteile im Radbereich abgedeckt und geschützt werden. Insbesondere ist eine Überdeckung der Nabenverschraubung möglich. Dies verhindert eine Demontage der Nabe, so dass auch hierdurch die Sicherungseinrichtung nicht umgangen werden kann. Mit dem an der Felge angreifenden Sperrteil der Sicherungseinrichtung lassen sich zudem ein oder mehrere Radverschraubungen abdecken, so dass auch von der Radvorderseite her keine Demontage möglich ist.

Der Verschluss zur Verbindung von Sperrteil und Basisteil der Sicherungseinrichtung ist diebstahls- und aufbruchsicher ausgebildet. Er ist mit einem Schloss und/oder einer Spezialschraube ausgerüstet, die nur mit einem Schlüssel oder einem Spezialwerkzeug geöffnet werden können. Dies sichert gegen ein unbefugtes Öffnen.

Die Sicherungseinrichtung lässt sich besonders leicht und einfach handhaben. Sie stört auch nicht den normalen Fahrbetrieb. Das Basisteil der Sicherungseinrichtung ist fest am Bremsträger oder Bremsschild montiert und stört nicht die normalen Fahrzeugfunktionen. Sperrige Zusatzteile sind nicht erforderlich. Das Sperrteil und der Verschluss bauen klein und lassen sich bei Nichtgebrauch problemlos am Fahrzeuganhänger unterbringen. Die Sicherungseinrichtung ist außerdem einfach zu bedienen und bedarf keiner aufwändigen Einweisung oder Schulung. Das Anbringen des Sperrteils und des Schlosses ist ohne Verschmutzung oder Unfallgefahr von der Radvorderseite her möglich. Der Fahrzeuganhänger braucht zum Drehen des Fahrzeugrads in die Montage- und Deckungsstellung der Sicherungsteile und zum Schließen des Verschlusses nur geringfügig bewegt zu werden. In aufgebockter Stellung kann auch das entlastete Fahrzeugrad für sich gedreht werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: einen Fahrzeuganhänger mit einer montierten Sicherungseinrichtung in Seitenansicht,
- Figur 2:: eine vergrößerte Seitenansicht eines Fahrzeugrades mit montierter Sicherungseinrichtung,
- Figur 3:: eine Explosionsdarstellung der Sicherungseinrichtung nebst Felge, Nabe und Schwinghebel,
- Figur 4:: einen Querschnitt durch die Nabe mit dem Basisteil der Sicherungseinrichtung und dem Radschwinghebel,
- Figur 5:: eine rückseitige Ansicht von Schwinghebel, Nabe und Sicherungseinrichtung,
- Figur 6:: eine perspektivische Darstellung eines Basisteils der Sicherungseinrichtung,
- Figur 7:: eine Draufsicht auf die Nabe mit der Bremstrommel und dem Basisteil der Sicherungseinrichtung und
- Figur 8:: eine Draufsicht gemäß Figur 7 mit abgenommener Bremstrommel.

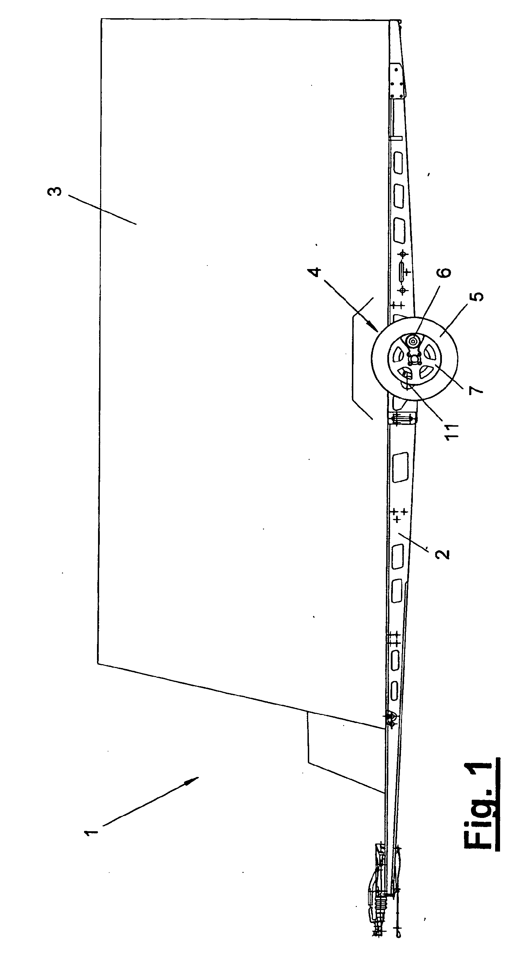

Figur 1 zeigt in Seitenansicht einen Fahrzeuganhänger mit einer Sicherungseinrichtung (6). Der Fahrzeuganhänger (1) besitzt ein Fahrgestell (2) mit einem Aufbau (3), ein oder mehreren Achsen (4) und Fahrzeugräder (5). Das Fahrgestell besteht aus Längsträgern und einer frontseitigen, vorzugsweise starren Deichsel mit einer Anhängerkupplung. Die Deichsel ist z.B. als V-Deichsel ausgebildet und am Ende direkt mit den Längsträgern verbunden. Das Fahrgestell (2) kann auch ein oder mehrere Querträger oder ggf. einen Heckauszug haben. Der Aufbau (3) kann von beliebiger Art sein, in Figur 1 ist ein kastenartiger Aufbau in der Art eines Wohnwagens, eines Verkaufsfahrzeugs oder dgl. angedeutet.

Die Achse (4) kann in beliebiger Weise ausgebildet sein. Beispielsweise handelt es sich um eine Gummifederachse mit einem Achsrohr, an dessen beiden Enden Radschwinghebel (11) eingesteckt sind. Die Schwinghebel bestehen jeweils aus einem Innenrohr (12) mit Aufnahmen für die Achsdämpfer, insbesondere die Gummischnüre. Am Innenrohr (12) ist der Schwingarm (13) befestigt, an dem wiederum die Nabe (10) mit der Radbremse angeordnet ist. Der Radschwinghebel (11) ist in der gezeigten Ausführungsform schräg ausgestellt. Die Achse (4) kann als Längslenkerachse, Schräglenkerachse oder in beliebig anderer Weise ausgestaltet sein.

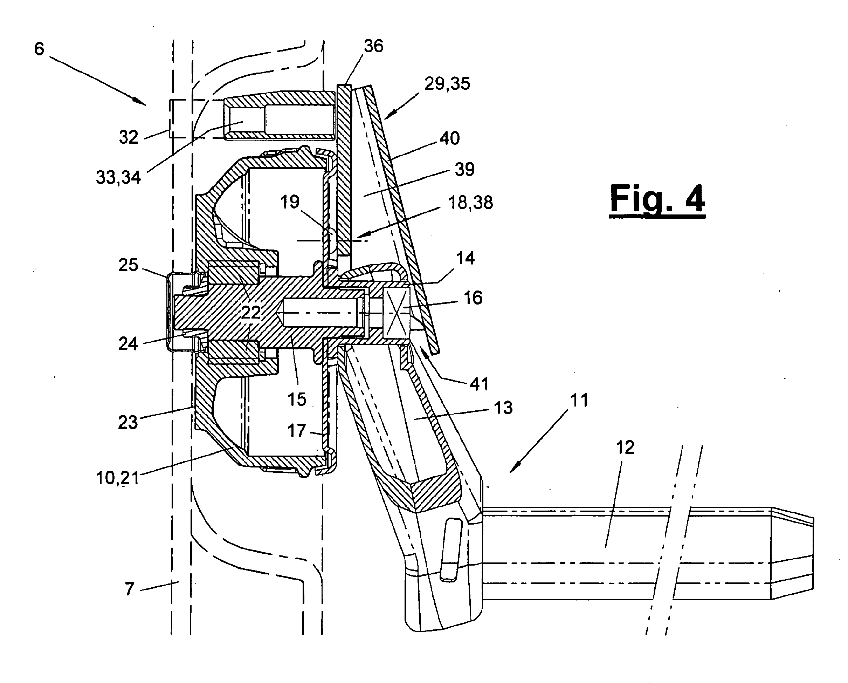

An der Nabe (10) ist die Felge (7) des Fahrzeugrades (5) montiert. Die Radbremse ist in der gezeigten Ausführungsform als Trommelbremse ausgestaltet und besitzt eine Bremstrommel (21) mit innenseitigen Bremselementen (nicht dargestellt) und einem rückseitigen Bremsträger in Form eines Bremsschildes (17). Figur 4 zeigt diese Anordnung im Querschnitt.

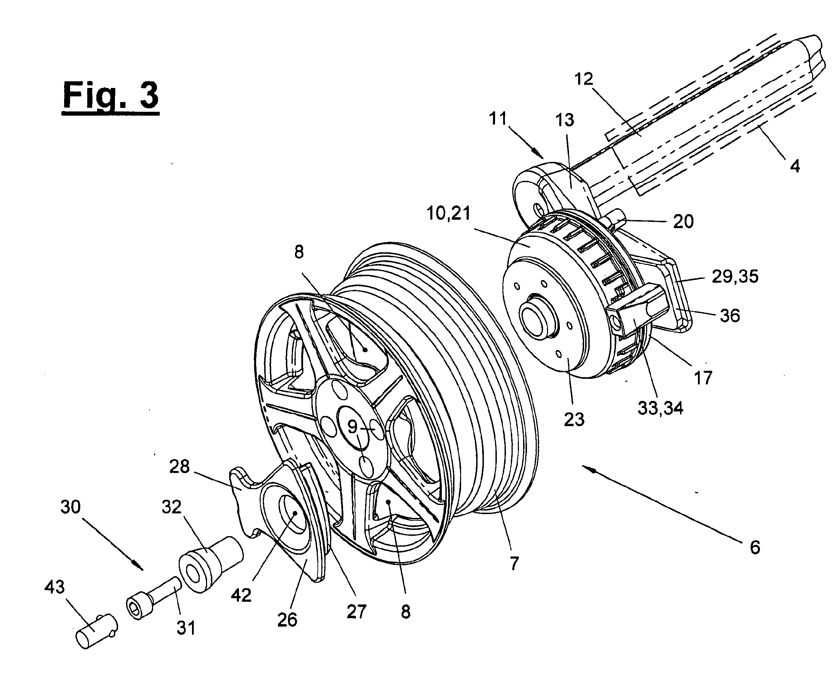

Der Schwingarm (13) hat am vorderen Ende eine Queröffnung zur Aufnahme einer Buchse (14), in der frontseitig der Achsstummel (15) eingesetzt ist, der an der Buchsenrückseite durch eine in Figur 4 angedeutete Nabenverschraubung (16) fixiert und gesichert ist. Der Bremsschild (17) ist auf dem Achsstummel (15) befestigt, insbesondere festgeschraubt und dabei zwischen Flanschen am Achsstummel (15) und der Buchse (14) eingespannt. In Umfangsrichtung des Bremsschilds (17) kann eine formschlüssige Drehsicherung vorhanden sein. Die Bremstrommel (21) ist mit einem Lager (22) auf das vordere Ende des Achsstummels (15) aufgesetzt und wird in dieser Lage durch eine frontseitige aufgeschraubte Mutter (24) gesichert. Ein Deckel (25) deckt die Anordnung ab. Die Felge (7) wird an der frontseitigen Nabenfläche (23) oder Anschraubfläche der Bremstrommel (21) mittels Radverschraubungen (9) befestigt. Figur 3 zeigt diese Anordnung.

Der Fahrzeuganhänger (1) kann gegen Wegfahren und das einzelne Rad (5) kann gegen Diebstahl gesichert werden, indem die Felge (7) mit dem Bremsträger oder Bremsschild (17) formschlüssig sperrend und lös- und verschließbar sowie von vorn zugänglich verbunden wird. Außerdem können die Achsverbindungsstellen des Bremsträgers oder Bremsschilds (17), insbesondere der Achsstummel (15) und die Nabenverschraubung (16) rückseitig abgedeckt werden, wodurch eine Demontage der Nabe (10) und des Bremsträgers oder Bremsschilds (17) verhindert werden kann.

Die zur Wegfahr- und/oder Diebstahlsicherung verwendete Sicherungseinrichtung (6) verbindet die Felge (7) mit dem Bremsträger, insbesondere dem Bremsschild (17). Die Verbindung ist formschlüssig sperrend und lösbar sowie verschließbar. Der Bremsträger (17) kann bei einer anderen Bremskonstruktion, z.B. einer Scheibenbremse, entsprechend anders ausgebildet sein.

Die Sicherungseinrichtung (6) besteht in der gezeigten Ausführungsform aus einem mit der Felge (7) verbindbaren Sperrteil (26), einem am Bremsträger (17) befestigten Basisteil (29) und einem lösbaren Verschluss (30), der das Sperrteil (26) und das Basisteil (29) verbindet. Vorzugsweise sind die genannten Teile (26,29,30) pro Rad ein Mal vorhanden. Sie können alternativ mehrfach vorhanden sein. Am Fahrzeuganhänger (1) kann an einem oder an mehreren Fahrzeugrädern (5) eine Sicherungseinrichtung (6) vorhanden sein.

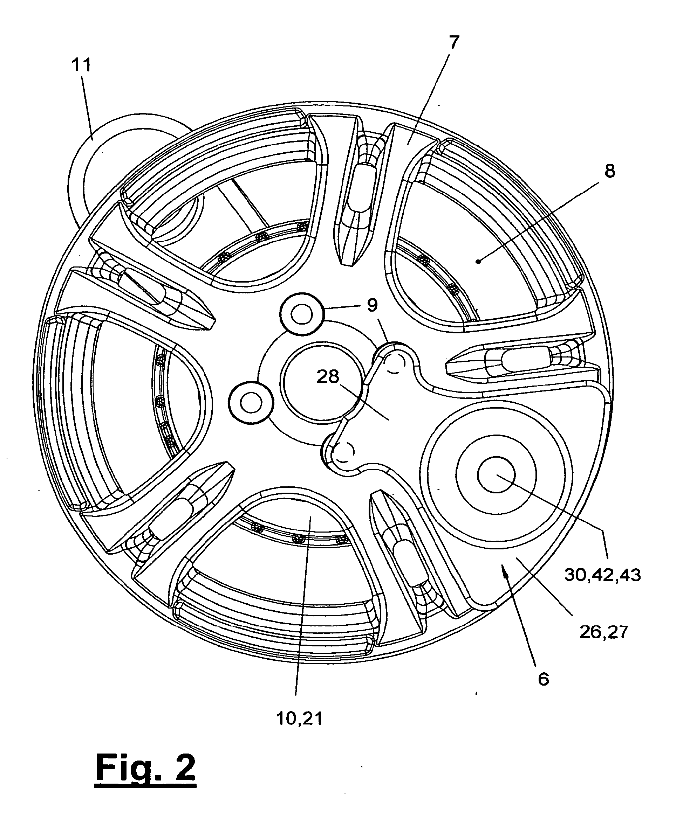

Wie Figur 3 in der Explosionsdarstellung verdeutlicht, kann das Sperrteil (26) formschlüssig und lösbar mit der Felge (7) verbunden werden. Das Sperrteil (26) kann an der Frontseite der Felge (7) angesetzt und dort mit ihr verbunden werden. Figur 2 zeigt in der Draufsicht die Montage- und Sperrstellung. In der gezeigten Ausführungsform greift das Sperrteil (26) an einer Felgenöffnung (8) an. Es hat hierfür einen an die Felgenöffnung (8) angepassten und dort von vorn formschlüssig einsetzbaren Korpus (27), der an den Öffnungsrändern im wesentlichen spielfrei anliegt. An diesen Kontaktstellen des Korpus (27) kann eine Beschichtung aus Gummi, ein eingelegter Gummiring oder dgl. zum Felgenschutz und zur Spielaufnahme vorhanden sein. Für verschiedene Felgenformen kann es entsprechend angepasste Sperrteile (26) geben. Das Sperrteil (26) hat außerdem einen seitlich abstehenden Flansch (28), der in der Montage- und Sperrstellung ein oder mehrere Radschrauben (9) außenseitig abdeckt und ein Herausdrehen der Radschrauben verhindert. Figur 2 zeigt diese Anordnung.

Das Sperrteil (26) kann aus Leichtmetall, Kunststoff oder dgl. bestehen. Es hat im Korpus (27) eine Durchgangsöffnung (42) zum frontseitigen Einsetzen des Verschlusses (30). Die Durchgangsöffnung (42) kann eine trichterförmig sich erweiternde, frontseitige Mündung aufweisen. Der Verschluss (30) besteht in der gezeigten Ausführungsform aus einer Sicherheitsschraube (31) und einem hülsenförmigen Einsatz (32). Der Einsatz (32) hat einen rückseitigen trichterförmigen Bund, der formschlüssig in die Aufnahmeöffnung (42) eingesetzt werden kann. Die Sicherheitsschraube (31) wird durch den Einsatz (32) gesteckt und hat eine konische Ansatzspitze zum leichteren Auffinden und Zentrieren in der Schraubgegenöffnung, die in der nachfolgend beschriebenen Weise an einem Gegenstück (33) angeordnet ist. Die Sicherheitsschraube (31) besitzt in der gezeigten Ausführung einen Kopf, auf dem gemäß Figur 3 von außen ein Schloss (43) aufgesetzt werden kann, dessen Außenseite bündig mit dem Außenrand des Einsatzes (32) abschließt. Der Einsatz (32) besteht aus einem besonders harten und festen Material, z.B. einem vergüteten Stahl, welches ein Aufbohren verhindert.

Alternativ kann die Sicherheitsschraube (31) einen Spezialkopf aufweisen, der nur mit einem besonderen Werkzeug gedreht werden kann. Ferner kann die Sicherheitsschraube (31) als Schlüsselschraube ausgebildet sein. Außerdem kann die Sicherheitsschraube (31) eine normale Schraube sein, wobei die Schraubenzugangsöffnung im Einsatz (32) durch ein dort angreifendes Schloss oder dgl. versperrt werden kann. Ferner kann es weitere konstruktive Möglichkeiten zum Verschließen oder Versperren des unbefugten Zugangs zur Sicherheitsschraube (31) geben.

Daneben gibt es beliebige andere Ausbildungsmöglichkeiten für die diebstahls- und aufbruchsichere Gestaltung des lösbaren Verschlusses (30). Das Sperrteil (26) und der Verschluss (30) werden von der Felgenvorderseite her montiert und in eine Felgenöffnung (8) eingesetzt.

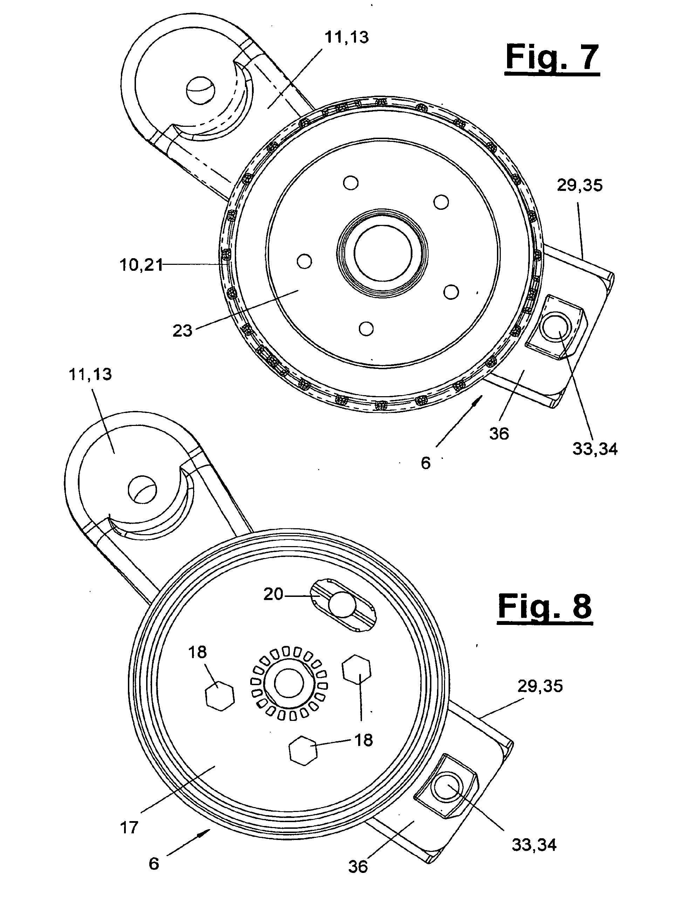

Das Basisteil (29) ist am Bremsträger (17) befestigbar. Es wird bei Neufahrzeugen werkseitig montiert und mitgeliefert. Bei Gebauchtfahrzeugen kann die Montage nachträglich im Rahmen einer Umrüstung oder Nachrüstung geschehen. Das Basisteil (29) wird gemäß Figur 3 und 4 an der Rückseite des Bremsschilds (17) montiert und legt dabei über ein oder mehrere Abstützungen (19) parallel und statisch abgestützt am Bremsschild (17) an. Das Basisteil (29) hat hierfür eine ebene Stützplatte (36) mit mehreren Befestigungsstellen (38), die z.B. als Schrauböffnungen ausgebildet sind. Der Bremsschild (17) hat entsprechende Befestigungsstellen (18), die z.B. ebenfalls als Schrauböffnungen ausgestaltet sind. Figur 8 zeigt deren Anordnung. Zur Bildung der Abstützungen (19) können an den bremsschildseitigen Befestigungsstellen (18) Ausprägungen an der Schildwand vorhanden sein, auf denen die Stützplatte (36) plan aufliegen und mit einer Dreipunktlagerung abgestützt werden kann. Die Abstützungen (19) können auch lose Zwischenscheiben sein. Die Befestigungselemente können Schrauben, Niete oder dgl. sein.

Die Befestigungsstellen (18,38) können in beliebig geeigneter Weise angeordnet und verteilt sein. In der gezeigten Ausführungsform sind drei solche Befestigungsstellen (18,38) im Bogen um die Zentralachse des Achsstummels (15) und der Nabe (10) angeordnet. Die Befestigung des Basisteils (29) und insbesondere seiner Stützplatte (36) am Bremsträger oder Bremsschild (17) kann in beliebig geeigneter Weise geschehen.

In Abwandlung der vorerwähnten Durchgangsverschraubung kann eine Spannverschraubung mit einem Gegengewinde im Bremsträger (17) oder im Basisteil (29) Verwendung finden. Ferner können Schweißmuttern oder Einnietmuttern außenseitig am Bremsschild (17) angebracht sein, welche die Funktion der Abstützungen (19) übernehmen und genau so wie die im Ausführungsbeispiel genannten Ausprägungen in ihrer Höhe auf den Randwulst des Bremsschilds (17) abgestimmt sind, so dass das Basisteil (29) zusätzlich zu den Befestigungsstellen (18,38) auch an diesem Randwulst aufliegen und abgestützt werden kann. In weiterer Abwandlung sind Schraubbolzen am Bremsschild möglich. Das Basisteil (29) und insbesondere seine Stützplatte (36) können auch auf andere Weise, z.B. durch Nieten oder Schweißen, fest mit dem Bremsträger oder dem Bremsschild (17) verbunden werden. Schweißmuttern können auch außenseitig an der Stützplatte (36) über den Durchgangsbohrungen an den Befestigungsstellen (38) befestigt werden. Günstig ist hierbei eine Montage der Befestigungsmittel, insbesondere der Schrauben, von der Bremsschildinnenseite her, so dass die Befestigungsmittel bei aufgesetzter Bremstrommel vor unbefugtem Zugriff gesichert und von außen unzugänglich untergebracht sind.

Die Stützplatte (36) des Basisteils (29) erstreckt sich parallel zur Hauptebene des Bremsschilds (17) und überragt an mindestens einer Stelle seitlich den Bremsschild (17) und die Bremstrommel (21). An diesem Überstand ist ein Gegenstück (33) des Verschlusses (30) befestigt. Hierbei handelt es sich z.B. um einen stabilen und starr mit der Stützplatte (36) durch Schweißen oder dergleichen verbundenen Sockel (34) mit einer Schrauböffnung mit Innengewinde zur Aufnahme der Sicherheitsschrauben (31). Das Gegenstück (33) wirkt dadurch als Mutterstück für die Sicherheitsschrauben (31). Alternativ kann statt der Schraube (31) ein anderes Klemm- oder Spannstück Verwendung finden, welches an dem entsprechend ausgebildeten Gegenstück (33) lösbar angreift.

Wie Figur 4 verdeutlicht, ragt das Gegenstück (33) von der Stützplatte (36) nach vorn zur Felge (7) und endet in enger Nachbarschaft zur Felgenwandung. Das Gegenstück (33) wird außenseitig von der Felge (7) und ihren Felgenarmen umschlossen und ist dadurch von der Seite und von hinten her kaum zugänglich. Andererseits behindert das Gegenstück (33) nicht die freie Rad- und Felgendrehung im Fahrbetrieb.

Die Längen des Gegenstücks (33) und des Einsatzes (32) sind so aufeinander abgestimmt, dass die beiden Teile in Montagestellung stirnseitig aneinander liegen und von der Sicherheitsschrauben (31) zusammengehalten und gespannt werden. Der Einsatz (32) hat dabei in der Durchgangsöffnung (42) ein leichtes axiales Spiel ohne dortige Spannwirkung , wobei der formschlüssige und z.B. konische Verbund des Einsatzes (32) mit dem Sperrteil (26) Querkräfte bei einem Aufbrechversuch und einer versuchten Raddrehung aufnimmt und sperrt und auch ein axiales Abziehen der Felge (7) verhindert. Die Querkräfte werden über den Einsatz (32) ggf. unter Entlastung der Sicherheitsschraube (31) abgestützt. Die Sicherheitsschraube (31) übernimmt dabei in erster Linie die axialen Spann- und Haltekräfte.

Das Gegenstück (33) kann alternativ frontseitig eine an den Einsatz (32) angepasste Aufnahmeöffnung für dessen teilweises Eintauchen aufweisen. Das Schraubgewinde für die durchgesteckte Sicherheitsschraube (21) ist demgegenüber weiter hinten angeordnet. Der formschlüssig am Sperrteil (26) und am Gegenstück (33) eingesteckte Einsatz (32) wirkt als formschlüssiger Sperrstift oder Riegel, der den Verschluss (30) zusätzlich stabilisiert

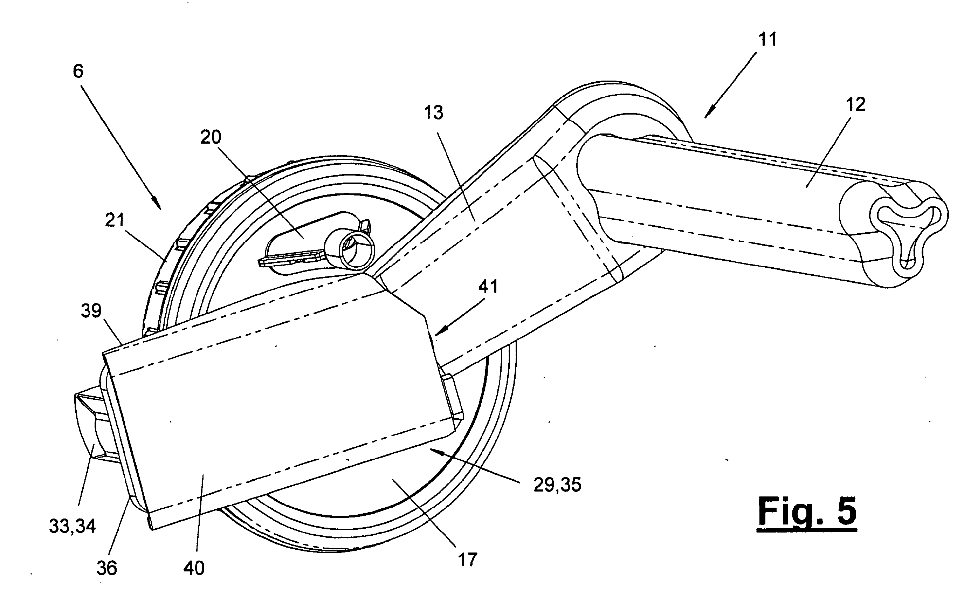

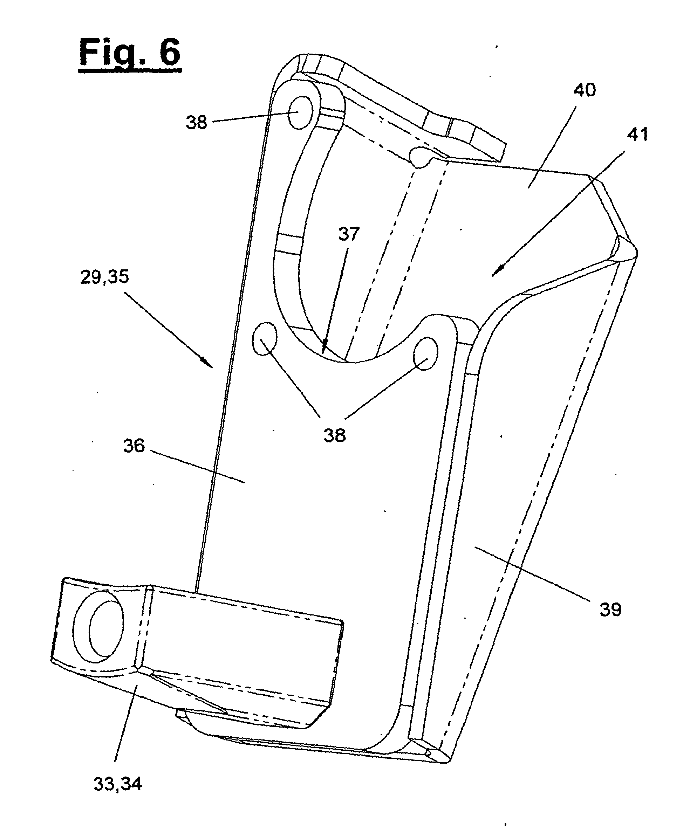

In der gezeigten und bevorzugten Ausführungsform ist das Basisteil (29) als hohler Schutzkasten (35) ausgebildet, der auf den Schwinghebel (11) und insbesondere den Schwingarm (13) schützend aufgesteckt werden kann und diesen zumindest teilweise umgibt. Die Kastenform wird hierbei durch einen haubenförmigen Kastendeckel (39) gebildet, der mit der Stützplatte (36) in geeigneter Weise, z.B. durch Schweißen, verbunden ist. Figur 6 zeigt diese Ausgestaltung. Der Schutzkasten (35) hat eine konische Form mit einer stirnseitigen großen Aufstecköffnung (41), einer schrägen Deckplatte (40) und Seitenwänden, die sich zum Gegenstück (33) hin verjüngen. An der verjüngten Seite ist der Schutzkasten (35) im wesentlichen geschlossen. Wie Figur 6 verdeutlicht, kann die Stützplatte (36) eine gerundete Ausnehmung (37) für den Achsstummel (15) bzw. die Buchse (14) aufweisen. Die Deckplatte (40) übergreift die Ausnehmungen (37) und deckt gemäß Figur 4 dadurch in Montagestellung die Nabenverschraubung (16) und die Befestigungsstellen (38) an der Stützplatte (36) rückseitig ab. Der Schwingarm (13) ragt durch die entsprechend große Aufstecköffnung (41) in den Kasteninnenraum. Durch diese Gestaltung sind sowohl die Nabenverschraubung (16), wie auch die Befestigungsstellen des Bremsschilds (17) an der Buchse (14) und am Achsstummel (15) gegen unbefugten Zugriff gesichert. Figur 5 zeigt diese Anordnung von hinten und verdeutlicht, dass auch von der Fahrgestellseite her keine Zugriffs- und Sabotagemöglichkeit auf die Sicherungseinrichtung (6) besteht. Bei dieser Anordnung bleibt der rückseitige Bremsanschluss (20) für das Bremsseil am Bremsschild (17) offen. Hierdurch wird die Bremsenmontage und auch die Nachstellung der Radbremsen nicht behindert.

Abwandlungen der gezeigten Ausführungsform sind in verschiedener Weise möglich. Bei einer anders ausgebildeten Bremsanlage sind der Bremsträger und das daran befestigte Basisteil (29) entsprechend anders ausgebildet. Ferner können an den Befestigungsstellen (38) an der Stützplatte (36) von außen Sicherheitsschrauben durch entsprechende kleine Öffnungen in der Deckplatte (40) eingesetzt werden. Bei der gezeigten Ausführungsform kann auf die Kastenform des Basisteils (29) und auf den Kastendeckel (39) verzichtet werden. Das Basisteil (29) besteht dann im wesentlichen aus der Stützplatte (36) und dem Gegenstück (33). Bei einer anderen Bremsgestaltung ist auch das Gegenstück (33) entsprechend anders angeordnet und in seiner konstruktiven Gestaltung und Ausrichtung angepasst. Auch der Radschwinghebel (11) kann in beliebig anderer Weise ausgestaltet und angeordnet sein. Je nach Achsausbildung kann er auch durch ein anderes Achselement ersetzt werden.

Variabel ist auch die Ausgestaltung und Anordnung des Sperrteils (26). Dieses richtet sich nach der Art und Ausbildung der Felge (7). In der gezeigten Ausführungsform ist die Felge (7) als Sternfelge mit großen Felgenöffnungen (8) zwischen den Sternarmen ausgebildet. Bei einer anderen Felgenform, z.B. einer Scheibenfelge, sind die Öffnungen kleiner und an anderer Stelle angeordnet. Dementsprechend ist das Sperrteil (26) anders ausgebildet. Ggf. findet auch eine Anpassung des Basisteils (29) und des Gegenstücks (33) an andere Felgenformen statt. Das Sperrteil (26) kann ferner in die Felge (7) integriert werden, die hierfür entsprechende Sicherungsöffnungen oder dgl. aufweist, durch die ein Einsatz oder ggf. nur die Sicherungsschraube, ein Sicherungsbolzen oder dgl. eingesteckt und in Eingriff mit dem Gegenstück (33) gebracht wird. Die Felge (7) kann bei entsprechender Anpassung zu einem Bestandteil der Sicherungseinrichtung (6) werden.

Ferner können am Basisteil (29) mehrere Gegenstücke (33) im Bogen um die Zentralachse verteilt angeordnet sein, die mit entsprechend mehrfach vorhandenen Sperrteilen (26) oder Felgenteilen zusammenwirken. Bei der gezeigten Ausführungsform erstreckt sich der seitliche Vorsprung oder Überstand des Basisteils (29) gegenüber dem Bremsschild (17) bzw. der Bremstrommel (21) im wesentlichen längs des Schwingarms (13). Er befindet sich in einer solchen Lage und Höhe, dass die Bodenfreiheit und der Schwing- oder Federweg des Radschwinghebels (11) im Fahrbetrieb nicht negativ beeinträchtigt sind. Alternativ sind andere Lagen und Anordnungen, ggf. auch in der vorerwähnten Mehrfachanordnung, möglich.

### BEZUGSZEICHENLISTE

- 1: Fahrzeuganhänger
- 2: Fahrgestell
- 3: Aufbau
- 4: Achse
- 5: Rad, Fahrzeugrad
- 6: Sicherungseinrichtung
- 7: Felge
- 8: Felgenöffnung
- 9: Radschraube, Schrauböffnung
- 10: Nabe
- 11: Schwinghebel, Radschwinghebel
- 12: Innenrohr
- 13: Schwingarm
- 14: Buchse
- 15: Achsstummel
- 16: Nabenverschraubung
- 17: Bremsträger, Bremsschild
- 18: Befestigungsstelle, Schrauböffnung
- 19: Abstützung, Ausprägung
- 20: Bremsanschluss
- 21: Bremstrommel
- 22: Lager
- 23: Nabenfläche, Anschraubfläche
- 24: Mutter
- 25: Deckel
- 26: Sperrteil
- 27: Korpus
- 28: Flansch
- 29: Basisteil
- 30: Verschluss
- 31: Sicherheitsschraube
- 32: Einsatz
- 33: Gegenstück, Mutterstück
- 34: Sockel
- 35: Schutzkasten
- 36: Stützplatte
- 37: Ausnehmung
- 38: Befestigungsstelle, Schrauböffnung
- 39: Kastendeckel, Haube
- 40: Deckplatte
- 41: Aufstecköffnung
- 42: Durchgangsöffnung
- 43: Schloss

## Patentansprüche

1. Sicherungseinrichtung für Fahrzeuganhänger, welche ein Fahrgestell (2) mit mindestens einer Achse (4), Radbremsen, Bremsträgern (17), Naben (10) und Räder (5) mit Felgen (7) aufweisen, **dadurch gekennzeichnet, dass** die Sicherungseinrichtung (6) die Felge (7) mit dem Bremsträger (17) formschlüssig sperrend und lösbar verbindet.

2. Sicherungseinrichtung nach Anspruch 1, **dadurch gekennzeichnet, dass** die Sicherungseinrichtung (6) jeweils mindestens ein Sperrteil (26), ein Basisteil (29) und einen lösbaren Verschluss (30) zur Verbindung der Teile (26,29) aufweist.

3. Sicherungseinrichtung nach Anspruch 2, **dadurch gekennzeichnet, dass** das Basisteil (29) ein Gegenstück (33) für den Verschluss (30) aufweist.

4. Sicherungseinrichtung nach Anspruch 3, **dadurch gekennzeichnet, dass** das Gegenstück (33) außenseitig von der Felge (7) und ihren Felgenarmen umschlossen ist.

5. Sicherungseinrichtung nach einem der Ansprüche 2 bis 4, **dadurch gekennzeichnet, dass** das Sperrteil (26) formschlüssig und lösbar mit der Felge (7) verbindbar ist.

6. Sicherungseinrichtung nach einem der Ansprüche 2 bis 5, **dadurch gekennzeichnet, dass** das Sperrteil (26) einen an eine Felgenöffnung (8) angepassten und dort formschlüssig einsetzbaren Korpus (27) aufweist.

7. Sicherungseinrichtung nach einem der Ansprüche 2 bis 6, **dadurch gekennzeichnet, dass** das Sperrteil (26) einen abstehenden Flansch (28) aufweist, der ein oder mehrere Radschrauben (9) außenseitig abdeckt.

8. Sicherungseinrichtung nach einem der Ansprüche 2 bis 7, **dadurch gekennzeichnet, dass** der Verschluss (30) einen am Sperrteil (26) montierbaren hülsenförmigen Einsatz (32) mit einer Sicherheitsschraube (31) und einem Schloss (43) aufweist.

9. Sicherungseinrichtung nach einem der Ansprüche 2 bis 8, **dadurch gekennzeichnet, dass** das Basisteil (29) am Bremsträger (17) befestigbar ist.

10. Sicherungseinrichtung nach einem der Ansprüche 2 bis 9, **dadurch gekennzeichnet, dass** das Basisteil (29) an der Rückseite eines Bremsschilds (17) fest montierbar ist und seitlich über den Bremsschild (17) vorsteht.

11. Sicherungseinrichtung nach einem der Ansprüche 3 bis 10, **dadurch gekennzeichnet, dass** das Gegenstück (33) seitlich neben der Nabe (10) angeordnet ist.

12. Sicherungseinrichtung nach einem der Ansprüche 3 bis 11, **dadurch gekennzeichnet, dass** das Gegenstück (33) einen zur Felge (7) vorstehenden stabilen Sockel (34) aufweist.

13. Sicherungseinrichtung nach einem der Ansprüche 3 bis 12, **dadurch gekennzeichnet, dass** das Gegenstück (33) ein Innengewinde aufweist und als Mutterstück für die Sicherheitsschraube (31) ausgebildet ist.

14. Sicherungseinrichtung nach einem der Ansprüche 2 bis 13, **dadurch gekennzeichnet, dass** das Basisteil (29) als hohler und auf einen Schwinghebel (11) aufsteckbarer Schutzkasten (35) ausgebildet ist.

15. Sicherungseinrichtung nach Anspruch 14, **dadurch gekennzeichnet, dass** der Schutzkasten (35) in Montagestellung eine Nabenverschraubung (16) abdeckt.

16. Sicherungseinrichtung nach Anspruch 14 oder 15, **dadurch gekennzeichnet, dass** der Schutzkasten (35) eine am Bremsträger oder Bremsschild (17) montierbare Stützplatte (36) aufweist, an der das Gegenstück (33) angeordnet ist.

17. Sicherungseinrichtung nach Anspruch 16, **dadurch gekennzeichnet, dass** der Bremsträger oder Bremsschild (17) und die Stützplatte (36) Befestigungsstellen (18,38) aufweisen, die in Sperrstellung der Sicherungseinrichtung (6) von außen nicht zugänglich sind.

18. Sicherungseinrichtung nach Anspruch 16 oder 17, **dadurch gekennzeichnet, dass** die Stützplatte (36) und/oder der Bremsträger oder Bremsschild (17) Abstützelemente (19) für eine statisch bestimmte Stützanlage aufweisen.

19. Sicherungseinrichtung nach Anspruch 16, 17 oder 18, **dadurch gekennzeichnet, dass** die Stützplatte (36) eine randseitige Ausnehmung (37) für die Nabenverschraubung (16) aufweist.

20. Sicherungseinrichtung nach einem der Ansprüche 16 bis 19, **dadurch gekennzeichnet, dass** der Schutzkasten (35) einen mit der Stützplatte (36) verbundenen Kastendeckel (39) aufweist.

21. Sicherungseinrichtung nach einem der vorhergehenden Ansprüche, **dadurch gekennzeichnet, dass** der Schutzkasten (35) eine konische Form mit einer der Nabenverschraubung (16) zugewandten Aufstecköffnung (41) aufweist.

22. Sperrteil für eine formschlüssig sperrende Sicherungseinrichtung (6) für einen Fahrzeuganhänger (1), wobei das Sperrteil (26) lösbar mit einer Felge (7) des Fahrzeuganhängers (1) verbindbar ist, **dadurch gekennzeichnet, dass** das Sperrteil (26) einen lösbaren Verschluss (30) aufweist und mit einem an einem Bremsträger (17) des Fahrzeuganhängers (1) befestigten Basisteil (29) verbindbar ist.

23. Sperrteil nach Anspruch 22, **dadurch gekennzeichnet, dass** der Verschluss (30) zur Verbindung mit einem zur Felge (7) vorstehenden stabilen Sockel (34) eines Gegenstücks (33) am Basisteil (29) vorgesehen ist.

24. Sperrteil nach Anspruch 22 oder 23, **dadurch gekennzeichnet, dass** der Verschluss (30) einen am Sperrteil (26) montierbaren hülsenförmigen Einsatz (32) mit einer Sicherheitsschraube (31) und einem Schloss (43) aufweist.

25. Sperrteil nach Anspruch 22, 23 der 24, **dadurch gekennzeichnet, dass** das Gegenstück (33) außenseitig von der Felge (7) und ihren Felgenarmen umschlossen ist.

26. Sperrteil nach einem der Ansprüche 22 bis 25, **dadurch gekennzeichnet, dass** das Gegenstück (33) ein Innengewinde aufweist und als Mutterstück für die Sicherheitsschraube (31) ausgebildet ist.

27. Sperrteil nach einem der Ansprüche 22 bis 26, **dadurch gekennzeichnet, dass** das Sperrteil (26) einen abstehenden Flansch (28) aufweist, der ein oder mehrere Radschrauben (9) außenseitig abdeckt.

28. Sperrteil nach einem der Ansprüche 22 bis 27, **dadurch gekennzeichnet, dass** das Sperrteil (26) im Korpus (27) eine Durchgangsöffnung (42) zum frontseitigen Einsetzen des Verschlusses (30) aufweist.

29. Verfahren zur Sicherung von Fahrzeuganhängern (1), welche ein Fahrgestell (2) mit mindestens einer Achse (4), Radbremsen, Bremsträgern (17), Naben (10) und Räder (5) mit Felgen (7) aufweisen, **dadurch gekennzeichnet, dass** der Fahrzeuganhänger (1) gegen Wegfahren und das Rad (5) gegen Diebstahl gesichert werden, wobei die Felge (7) mit dem Bremsträger (17) formschlüssig sperrend und lös- sowie verschließbar verbunden wird.

30. Verfahren nach Anspruch 29, **dadurch gekennzeichnet, dass** ein Sperrteil (26) einer Sicherungseinrichtung (6) an der Frontseite der Felge (7) angesetzt und mit einem Basisteil (29) am Bremsträger (17) durch einen lösbaren Verschluss (30) verbunden wird.

31. Verfahren nach Anspruch 29 oder 30, **dadurch gekennzeichnet, dass** der Verschluss (30) frontseitig in eine Durchgangsöffnung (42) im Korpus (27) des Sperrteils (6) eingesetzt wird.

32. Verfahren nach Anspruch 29, 30 oder 31, **dadurch gekennzeichnet, dass** eine Schraube (31) oder ein Klemm- oder Spannstück des Verschlusses (30) an einem entsprechend ausgebildeten Gegenstück (33) lösbar angreift, das am Basisteil (29) befestigt und außenseitig von der Felge (7) und ihren Felgenarmen umschlossen ist.

33. Verfahren nach einem der Ansprüche 29 bis 32, **dadurch gekennzeichnet, dass** mit dem an der Felge (7) angreifenden Sperrteil (6) ein oder mehrere Radverschraubungen (9) abgedeckt werden.

34. Verfahren nach einem der Ansprüche 29 bis 33, **dadurch gekennzeichnet, dass** die Achsverbindungsstellen des Bremsträgers oder Bremsschilds (17), insbesondere der Achsstummel (15) und die Nabenverschraubung (16) rückseitig abgedeckt werden.

## Claims

1. Locking device for vehicle trailers which have a chassis (2) with at least one axle (4), wheel brakes, brake anchor plates (17), hubs (10) and wheels (5) with rims (7), **characterized in that** the locking device (6) connects the rim (7) to the brake anchor plate (17) such that it locks with a form fit and can be released.

2. Locking device according to Claim 1, **characterized in that** the locking device (6) in each case has at least one locking part (26), a base part (29) and a releasable closure (30) for connecting the parts (26, 29).

3. Locking device according to Claim 2, **characterized in that** the base part (29) has a mating piece (33) for the closure (30).

4. Locking device according to Claim 3, **characterized in that** the outside of the mating piece (33) is enclosed by the rim (7) and its rim arms.

5. Safety device according to one of Claims 2 to 4, **characterized in that** the locking part (26) can be connected to the rim (7) in a form-fitting and releasable manner.

6. Locking device according to one of Claims 2 to 5, **characterized in that** the locking part (26) has a body (27) which is adapted to a rim opening (8) and can be inserted there with a form fit.

7. Locking device according to one of Claims 2 to 6, **characterized in that** the locking part (26) has a projecting flange (28) which covers the outside of one or more wheel bolts (9).

8. Locking device according to one of Claims 2 to 7, **characterized in that** the closure (30) has a sleeve-shaped insert (32) which can be mounted on the locking part (26) and has a safety bolt (31) and a lock (43).

9. Locking device according to one of Claims 2 to 8, **characterized in that** the base part (29) can be fastened to the brake anchor plate (17).

10. Locking device according to one of Claims 2 to 9, **characterized in that** the base part (29) can be firmly mounted on the rear side of a brake backing plate (17) and projects laterally beyond the brake backing plate (17).

11. Locking device according to one of Claims 3 to 10, **characterized in that** the mating piece (33) is arranged laterally next to the hub (10).

12. Locking device according to one of Claims 3 to 11, **characterized in that** the mating piece (33) has a stable base (34) which projects towards the rim (7).

13. Locking device according to one of Claims 3 to 12, **characterized in that** the mating piece (33) has an internal thread and is designed as a nut piece for the safety bolt (31).

14. Locking device according to one of Claims 2 to 13, **characterized in that** the base part (29) is designed as a hollow protection box (35) which can be pushed onto a rocker arm (11).

15. Locking device according to Claim 14, **characterized in that**, in the installed position, the protection box (35) covers a hub bolted connection (16).

16. Locking device according to Claim 14 or 15, **characterized in that** the protection box (35) has a support plate (36) which can be mounted on the brake anchor plate or brake backing plate (17) and on which the mating piece (33) is arranged.

17. Locking device according to Claim 16, **characterized in that** the brake anchor plate or brake backing plate (17) and the support plate (36) have fastening points (18, 38) which are not accessible from the outside when the locking device (6) is in the locking position.

18. Locking device according to Claim 16 or 17, **characterized in that** the support plate (36) and/or the brake anchor plate or brake backing plate (17) have support elements (19) for a statically determined support system.

19. Locking device according to Claim 16, 17 or 18, **characterized in that** the support plate (36) has a recess (37) on the edge for the hub bolted connection (16).

20. Locking device according to one of claims 16 to 19, **characterized in that** the protection box (35) has a box cover (39) which is connected to the support plate (36).

21. Locking device according to one of the preceding claims, **characterized in that** the protection box (35) has a conical shape with a push-on opening (41) which faces the hub bolted connection (16).

22. Locking part for a locking device (6), which locks in a form-fitting manner, for a vehicle trailer (1), wherein the locking part (26) can be connected releasably to a rim (7) of the vehicle trailer (1), **characterized in that** the locking part (26) has a releasable closure (30) and can be connected to a base part (29) which is fastened to a brake anchor plate (17) of the vehicle trailer (1).

23. Locking part according to Claim 22, **characterized in that** the closure (30) is provided for connection to a stable base (34) of a mating piece (33) on the base part (29), the base projecting towards the rim (7).

24. Locking part according to Claim 22 or 23, **characterized in that** the closure (30) has a sleeve-shaped insert (32) which can be mounted on the locking part (26) and has a safety bolt (31) and a lock (43).

25. Locking part according to Claim 22, 23 or 24, **characterized in that** the outside of the mating piece (33) is enclosed by the rim (7) and its rim arms.

26. Locking part according to one of Claims 22 to 25, **characterized in that** the mating piece (33) has an internal thread and is designed as a nut piece for the safety bolt (31).

27. Locking part according to one of Claims 22 to 26, **characterized in that** the locking part (26) has a projecting flange (28) which covers one or more wheel bolts (9) on the outside.

28. Locking part according to one of Claims 22 to 27, **characterized in that** the locking part (26) has, in the body (27), a passage opening (42) for the insertion of the closure (30) on the front side.

29. Method for locking vehicle trailers (1) which have a chassis (2) with at least one axle (4), wheel brakes, brake anchor plates (17), hubs (10) and wheels (5) with rims (7), **characterized in that** the vehicle trailer (1) is locked against being driven away and the wheel (5) is locked against theft, the rim (7) being connected to the brake anchor plate (17) in a manner such that it locks with a form fit and in a releasable and lockable manner.

30. Method according to Claim 29, **characterized in that** a locking part (26) of a locking device (6) is fitted on the front side of the rim (7) and is connected to a base part (29) on the brake anchor plate (17) by means of a releasable closure (30).

31. Method according to Claim 29 or 30, **characterized in that** the closure (30) is inserted on the front side into a passage opening (42) in the body (27) of the locking part (6).

32. Method according to Claim 29, 30 or 31, **characterized in that** a bolt (31) or clamping or gripping piece of the closure (30) acts releasably on a correspondingly designed mating piece (33) which is fastened to the base part (29) and is enclosed on the outside by the rim (7) and its rim arms.

33. Method according to one of Claims 29 to 32, **characterized in that** one or more wheel bolted connections (9) are covered by the locking part (6) which acts on the rim (7).

34. Method according to one of Claims 29 to 33, **characterized in that** the axle connection points of the brake anchor plate or brake backing plate (17), in particular of the axle stub (15) and the hub bolted connection (16), are covered on the rear side.

## Revendications

1. Dispositif de verrouillage pour remorques de véhicule, qui présentent un châssis (2) avec au moins un essieu (4), des freins de roue, des supports de freins (17), des moyeux (10) et des roues (5) avec des jantes (7), **caractérisé en ce que** le dispositif de verrouillage (6) relie la jante (7) au support de frein (17) de manière détachable et fixée par engagement positif.

2. Dispositif de verrouillage selon la revendication 1, **caractérisé en ce que** le dispositif de verrouillage (6) présente à chaque fois au moins une partie de blocage (26), une partie de base (29) et une fermeture détachable (30) pour la connexion des parties (26, 29).

3. Dispositif de verrouillage selon la revendication 2, **caractérisé en ce que** la partie de base (29) présente une pièce conjuguée (33) pour la fermeture (30).

4. Dispositif de verrouillage selon la revendication 3, **caractérisé en ce que** la pièce conjuguée (33) est entourée du côté extérieur par la jante (7) et ses bras de jante.

5. Dispositif de verrouillage selon l'une quelconque des revendications 2 à 4, **caractérisé en ce que** la partie de blocage (26) peut être connectée par engagement positif et de manière détachable à la jante (7).

6. Dispositif de verrouillage selon l'une quelconque des revendications 2 à 5, **caractérisé en ce que** la partie de blocage (26) présente un corps (27) adapté à une ouverture de jante (8) et pouvant y être inséré par engagement positif.

7. Dispositif de verrouillage selon l'une quelconque des revendications 2 à 6, **caractérisé en ce que** la partie de blocage (26) présente une bride saillante (28) qui recouvre une ou plusieurs vis de roue (9) du côté extérieur.

8. Dispositif de verrouillage selon l'une quelconque des revendications 2 à 7, **caractérisé en ce que** la fermeture (30) présente un insert (32) en forme de douille pouvant être monté sur la partie de blocage (26) avec une vis de sécurité (31) et une serrure (43).

9. Dispositif de verrouillage selon l'une quelconque des revendications 2 à 8, **caractérisé en ce que** la partie de base (29) peut être fixée sur le support de frein (17).

10. Dispositif de verrouillage selon l'une quelconque des revendications 2 à 9, **caractérisé en ce que** la partie de base (29) peut être montée fixement sur le côté arrière d'un plateau de frein (17) et dépasse latéralement par-dessus le plateau de frein (17).

11. Dispositif de verrouillage selon l'une quelconque des revendications 3 à 10, **caractérisé en ce que** la pièce conjuguée (33) est disposée latéralement à côté du moyeu (10).

12. Dispositif de verrouillage selon l'une quelconque des revendications 3 à 11, **caractérisé en ce que** la pièce conjuguée (33) présente un culot (34) stable et saillant par rapport à la jante (7).

13. Dispositif de verrouillage selon l'une quelconque des revendications 3 à 12, **caractérisé en ce que** la pièce conjuguée (33) présente un filetage interne et est réalisée sous forme de pièce d'écrou pour la vis de sécurité (31).

14. Dispositif de verrouillage selon l'une quelconque des revendications 2 à 13, **caractérisé en ce que** la partie de base (29) est réalisée sous forme de caisse de protection (35) creuse et pouvant être enfichée sur un levier oscillant (11).

15. Dispositif de verrouillage selon la revendication 14, **caractérisé en ce que** la caisse de protection (35) recouvre un vissage de moyeu (16) dans la position de montage.

16. Dispositif de verrouillage selon la revendication 14 ou 15, **caractérisé en ce que** la caisse de protection (35) présente une plaque de support (36) pouvant être montée sur le support de frein ou le plateau de frein (17), sur laquelle est disposée la pièce conjuguée (33).

17. Dispositif de verrouillage selon la revendication 16, **caractérisé en ce que** le support de frein ou le plateau de frein (17) et la plaque de support (36) présentent des points de fixation (18, 38) qui ne sont pas accessibles de l'extérieur dans la position de blocage du dispositif de verrouillage (6).

18. Dispositif de verrouillage selon la revendication 16 ou 17, **caractérisé en ce que** la plaque de support (36) et/ou le support de frein ou le plateau de frein (17) présentent des éléments d'appui (19) pour une installation de support définie statiquement.

19. Dispositif de verrouillage selon la revendication 16, 17 ou 18, **caractérisé en ce que** la plaque de support (36) présente un évidement (37) du côté du bord, pour le vissage de moyeu (16).

20. Dispositif de verrouillage selon l'une quelconque des revendications 16 à 19, **caractérisé en ce que** la caisse de protection (35) présente un couvercle de caisse (39) connecté à la plaque de support (36).

21. Dispositif de verrouillage selon l'une quelconque des revendications précédentes, **caractérisé en ce que** la caisse de protection (35) présente une forme conique avec une ouverture d'enfichage (41) tournée vers le vissage de moyeu (16).

22. Partie de blocage pour un dispositif de verrouillage (6) à fixation par engagement positif pour une remorque de véhicule (1), la partie de blocage (26) pouvant être connectée de manière détachable à une jante (7) de la remorque du véhicule (1), **caractérisée en ce que** la partie de blocage (26) présente une fermeture détachable (30) et peut être connectée à une partie de base (29) fixée à un support de frein (17) de la remorque de véhicule (1).

23. Partie de blocage selon la revendication 22, **caractérisée en ce que** la fermeture (30) est prévue pour la connexion à un culot (34) stable dépassant par rapport à la jante (7), d'une pièce conjuguée (33) sur la partie de base (29).

24. Partie de blocage selon la revendication 22 ou 23, **caractérisée en ce que** la fermeture (30) présente un insert (32) en forme de douille pouvant être monté sur la partie de blocage (26), avec une vis de sécurité (31) et une serrure (43).

25. Partie de blocage selon la revendication 22, 23 ou 24, **caractérisée en ce que** la pièce conjuguée (33) est entourée du côté extérieur par la jante (7) et ses bras de jante.

26. Partie de blocage selon l'une quelconque des revendications 22 à 25, **caractérisée en ce que** la pièce conjuguée (33) présente un filetage interne et est réalisée sous forme de pièce d'écrou pour la vis de sécurité (31).

27. Partie de blocage selon l'une quelconque des revendications 22 à 26, **caractérisée en ce que** la partie de blocage (26) présente une bride saillante (28) qui recouvre une ou plusieurs vis de roue (9) du côté extérieur.

28. Partie de blocage selon l'une quelconque des revendications 22 à 27, **caractérisée en ce que** la partie de blocage (26) présente, dans son corps (27), une ouverture de passage (42) pour l'insertion du côté frontal de la fermeture (30).

29. Procédé de verrouillage de remorques de véhicule (1), qui présentent un châssis (2) avec au moins un essieu (4), des freins de roue, des supports de freins (17), des moyeux (10) et des roues (5) avec des jantes (7), **caractérisé en ce que** la remorque de véhicule (1) est verrouillée pour l'empêcher de rouler et la roue (5) est verrouillée contre le vol, la jante (7) étant connectée au support de frein (17) de manière fixée par engagement positif, détachable et verrouillable.

30. Procédé selon la revendication 29, **caractérisé en ce qu'**une partie de blocage (26) d'un dispositif de verrouillage (6) est appliquée sur le côté frontal de la jante (7) et est connectée à une partie de base (29) sur le support de frein (17) par une fermeture détachable (30).

31. Procédé selon la revendication 29 ou 30, **caractérisé en ce que** la fermeture (30) est insérée du côté frontal dans une ouverture de passage (42) dans le corps (27) de la partie de blocage (6).

32. Procédé selon la revendication 29, 30 ou 31, **caractérisé en ce qu'**une vis (31) ou une pièce de coinçage ou de serrage de la fermeture (30) vient en prise de manière détachable avec une pièce conjuguée (33) réalisée en conséquence, qui est fixée à la partie de base (29) et est entourée du côté extérieur par la jante (7) et par ses bras de jante.

33. Procédé selon l'une quelconque des revendications 29 à 32, **caractérisé en ce qu'**un ou plusieurs vissages de roue (9) sont recouverts avec la partie de blocage (6) venant en prise sur la jante (7).

34. Procédé selon l'une quelconque des revendications 29 à 33, **caractérisé en ce que** les points de connexion d'essieu du support de frein ou du plateau de frein (17), notamment le bout d'essieu (15) et le vissage de moyeu (16) sont recouverts du côté arrière.
